# FASCICULE DE BREVET EUROPEEN

(11) **EP 3 230 126 B1**
(45) Date de publication et mention de la délivrance du brevet: **30.12.2020**
(21) Numéro de dépôt: 15817944.0
(22) Date de dépôt: 23.11.2015
(51) Int. Cl.: B60Q 1/24, B60Q 1/50

(54) **DISPOSITIF D'ÉCLAIRAGE ET/OU DE SIGNALISATION MOBILE D'ACCUEIL POUR VÉHICULE AUTOMOBILE ASSOCIÉ À LA GESTION DES ACCÈS AU VÉHICULE**
BEWEGLICHE EINSTIEGSBELEUCHTUNGS- UND/ODER ANZEIGEVORRICHTUNG FÜR EIN KRAFTFAHRZEUG MIT FAHRZEUGZUGANGSÜBERWACHUNG
MOVEABLE COURTESY LIGHTING AND/OR INDICATING DEVICE FOR A MOTOR VEHICLE ASSOCIATED WITH VEHICLE ACCESS CONTROL

(30) Priorité: 03.12.2014 FR 1461831
(43) Date de publication de la demande: 18.10.2017
(73) Titulaire: PSA Automobiles SA, 78300 Poissy (FR)
(72) Inventeur: LE DALL, Christophe, 92150 Suresnes (FR); GONCALVES, Whilk Marcelino, 75013 Paris (FR); GACOIN, Nicolas, 91380 Chilly Mazarin (FR)
(86) Numéro de dépôt international: PCT/FR2015/053172
(87) Numéro de publication internationale: WO 2016/087742

(56) Documents cités:
- EP-A1- 2 799 286
- EP-A2- 2 674 328
- WO-A1-2013/182802
- WO-A1-2014/032971
- DE-A1-102011 118 675
- US-A- 5 097 397

## Description

La présente invention est relative à un dispositif permettant d'assurer l'illumination de la zone qui entoure notamment l'avant d'un véhicule automobile à l'arrêt.

Elle se rapporte plus particulièrement à un dispositif d'éclairage et/ou de signalisation mobile (dynamique) permettant d'assurer une illumination de ladite zone en réaction à une commande d'une fonction de gestion d'accès au véhicule souhaitée par le conducteur.

Ces fonctions d'accès portent notamment sur le verrouillage/super-verrouillage et déverrouillage des ouvrants du véhicules (portes, vitres, coffre, trappe à essence, ...) ainsi que sur l'activation/désactivation du système anti-intrusion de véhicule associé à une alarme, de jour comme de nuit.

Le document EP 2 799 286 A1 montre qu'il est connu d'utiliser dans un dispositif d'éclairage et de signalisation pour véhicule automobile un module lumineux rotatif présentant une face pour une fonction d'éclairage de nuit, une face pour la fonction feu diurne et une face supportant une inscription.

Les véhicules actuels disposent en règle générale, monté en série, d'un système de signalisation temporisée, qui provoque l'allumage simultané des quatre feux indicateurs de changement de direction (clignotants) suivant une fréquence de clignotement déterminée, généralement plus rapide que celle de la fonction feux de détresse et avec une temporisation de quelques secondes.

L'inconvénient d'un tel système est que, ni l'orientation de l'illumination fournie, ni la puissance de celle-ci, ne sont modifiables.

On connait du document FR2797614, un dispositif d'éclairage et/ou de signalisation agencé à l'intérieur du projecteur pour adopter plusieurs configurations d'éclairage.

Le dispositif d'éclairage comprend à cet effet, un équipage mobile autour d'axes parallèles orientés en Z.

L'équipage mobile comprend trois rangées de trois modules d'éclairage et/ou de signalisation aptes à se déplacer en rotation autour de leurs axes de rotation respectifs parallèles suivant Z.

Chaque rangée de modules participe à la création d'un faisceau lumineux qui coopère les unes avec les autres pour former un faisceau lumineux global adaptable en fonction des conditions d'utilisation du véhicule.

Le système d'entraînement des modules comprend un mécanisme d'entraînement à base de bielle(s) tel que décrit, notamment, dans le document FR2797677.

L'amplitude de rotation des modules tournants est limitée à 45° de part et d'autre d'un axe parallèle à la direction longitudinale du véhicule.

La présente invention propose une fonction d'éclairage qui met en scène différents modules tournants avec une grande diversité tant dans les mouvements/cinématique des modules tournants que dans l'intensité et/ou la couleur de l'éclairage des modules tournants.

Pour cela, la présente invention repose sur une succession de rotations de 0° à 180° (et inversement) des modules tournants autour de leurs axes de rotation respectifs répondant à des lois de commande déterminées et qui respectent la réglementation relative à l'éclairage automobile

Avantageusement, l'intensité et la couleur de l'éclairage de chaque module peuvent varier en accord avec l'ambiance lumineuse intérieure du véhicule.

Les différentes animations permettent ainsi à la fois d'offrir une confirmation de la prise en compte des commandes de gestion d'accès du véhicule, par le véhicule, bien différenciée des autres fonctions d'éclairage et/ou de signalisation, et une mise en valeur du véhicule en termes d'attractivité et d'identité de la marque du véhicule.

A cet effet la présente invention a pour premier objet un dispositif d'éclairage et/ou de signalisation d'un véhicule automobile tel que défini dans la revendication 1.

Selon une caractéristique, ledit dispositif comporte en outre un troisième module tournant, disposé entre les premier et deuxième modules tournants ; chacun des trois modules tournants étant commandé successivement en commençant par le premier module tournant, puis le troisième module tournant et enfin le deuxième module tournant.

Selon une autre caractéristique, il comporte au moins une deuxième source de lumière apte à générer un faisceau lumineux en direction de la deuxième face des modules tournants ; ladite source de lumière étant apte à générer une lumière à couleur changeante.

L'invention a pour deuxième objet, un projecteur de véhicule automobile comportant un boitier, caractérisé en ce que ledit boitier supporte à rotation des modules tournants d'un dispositif tel que décrit ci-dessus.

L'invention a pour troisième objet, un procédé de commande d'un dispositif d'éclairage et/ou de signalisation tel que décrit ci-dessus, caractérisé en ce qu'il consiste en début du cycle de durée déterminée à commander une première rotation du premier module tournant d'un angle d'au moins 180° autour de son axe de rotation suivant un premier sens de rotation, puis à la fin de la première rotation du premier module tournant, à commander une première rotation du deuxième module tournant d'un angle d'au moins 180° autour de son axe de rotation suivant le premier sens de rotation, puis à commander une deuxième rotation du premier module d'un angle d'au moins 180° selon un deuxième sens de rotation opposé au premier quand le deuxième module a terminé sa première rotation, et à commander une deuxième rotation du deuxième module d'un angle d'au moins 180° selon le deuxième sens de rotation quand le premier module a terminé sa deuxième rotation ; les premier et deuxième modules tournants présentant à la fin du cycle de durée leurs deuxièmes faces de manière visible de l'extérieur du véhicule.

Selon une autre caractéristique, ledit procédé consiste à commander une première rotation du troisième module tournant d'un angle d'au moins 180° autour de son axe de rotation entre les premières rotations des premier et deuxième modules tournants et à commander une deuxième rotation du troisième module d'un angle d'au moins 180° selon le deuxième sens de rotation entre les secondes rotations des premier et deuxième modules tournants.

Selon une autre caractéristique, il consiste à commander une diminution progressive de l'intensité de l'éclairage et/ou de signalisation à la fin de la période déterminée.

Selon une autre caractéristique, il consiste à commander une diminution progressive de l'intensité de l'éclairage et/ou de signalisation à la fin de la période déterminée, en fonction de la diminution progressive de l'intensité de l'éclairage d'ambiance intérieur du véhicule.

Selon une autre caractéristique, il consiste à commander un changement de couleur de l'éclairage et/ou de signalisation en fonction du changement de couleur de l'éclairage d'ambiance intérieur du véhicule.

L'effet de clignotement connu de l'état de l'art est ici remplacé par un balayage de l'éclairage et/ou signalisation, en azimut, dans la zone entourant le véhicule.

D'autres caractéristiques et avantages d'un dispositif selon l'invention, apparaîtront encore à travers la description qui suit d'exemples de réalisation, donnés à titre indicatif et non limitatif, en référence au dessin annexé sur lequel :
- - la figure 1 est une vue en perspective montrant un véhicule automobile équipé de projecteurs intégrant un dispositif d'éclairage et/ou de signalisation mobile selon l'invention ;
- la figure 2 est une section dans le plan horizontal XY, schématique, en vue de dessus, illustrant le dispositif d'éclairage et/ou de signalisation mobile selon l'invention comportant trois modules mobile en rotation autour de l'axe Z ;
- la figure 3 illustre, schématiquement, une section transversale d'un des deux projecteurs (suivant X) passant par l'axe d'un des modules tournants selon l'invention, dans une position d'illumination de la zone avant du véhicule ;
- la figure 4 illustre un premier exemple d'animation visuelle d'une fonction d'éclairage au déverrouillage des ouvrants du véhicule, de nuit, mis en œuvre par un dispositif d'éclairage et/ou de signalisation selon l'invention;
- la figure 5 illustre la même animation visuelle pour une fonction d'éclairage au déverrouillage/super-verrouillage/déverrouillage des ouvrants du véhicules, de jour ;
- la figure 6 illustre la même animation visuelle pour une fonction d'éclairage à l'activation/désactivation de l'alarme du véhicule ;
- la figure 7 illustre les chronogrammes des vitesses de rotation (angle vs temps) des modules et intensité lumineuse (% intensité fonction d'éclairage vs temps) pour les trois fonctions illustrées respectivement aux figure 4, 5 et 6 ;

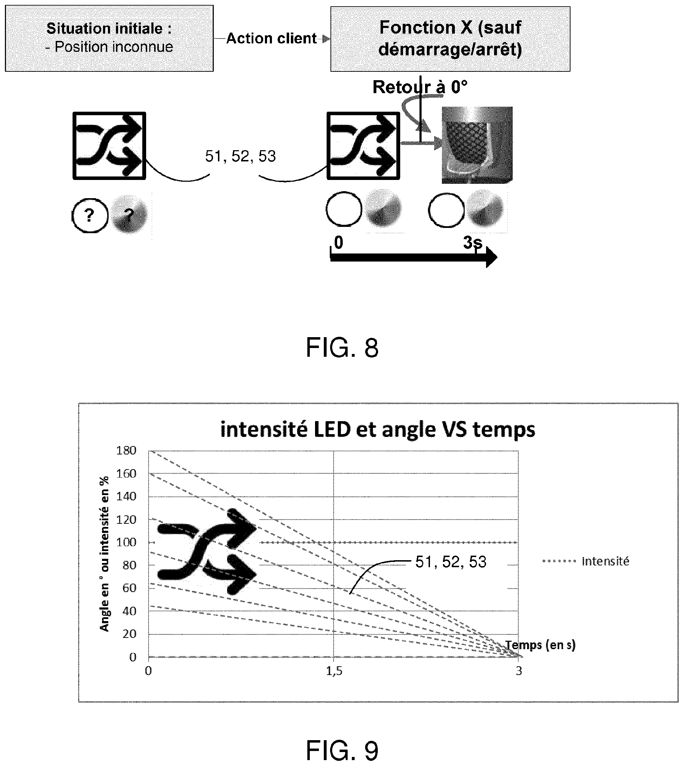

- la figure 8 illustre un scénario dans lequel la position des modules tournants est inconnue a priori ;
- la figure 9 illustre le chronogramme associé au scénario de la figure 8 ; et
- la figure 10 donne la légende des symboles utilisés dans les figures 4 à 6 et 8.

On définit par rapport au véhicule 1 (et donc par rapport au projecteur 2) un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le projecteur 2 comporte un boîtier 21 dont la face 22 externe comporte une courbure déterminée pour former avec les parties de carrosserie avoisinantes 40 (capot et aile) une continuité de forme contribuant à l'esthétisme de la face avant du véhicule 1.

Le dispositif 3 d'éclairage est agencé à l'intérieur du projecteur 2 pour adopter plusieurs configurations d'éclairage.

Le dispositif 3 d'éclairage comprend à cet effet, un équipage 5 mobile autour d'axes parallèles orientés en Z et comprend un module d'éclairage principal statique 6 assurant le niveau d'intensité réglementaire suivant l'axe longitudinal X du véhicule 1.

L'équipage 5 mobile comprend trois modules 51-53 d'éclairage et/ou de signalisation tournants aptes à se déplacer en rotation de plus ou moins 180° dans un sens et de plus ou moins 180° dans l'autre sens autour de leurs axes de rotation respectifs parallèles suivant Z.

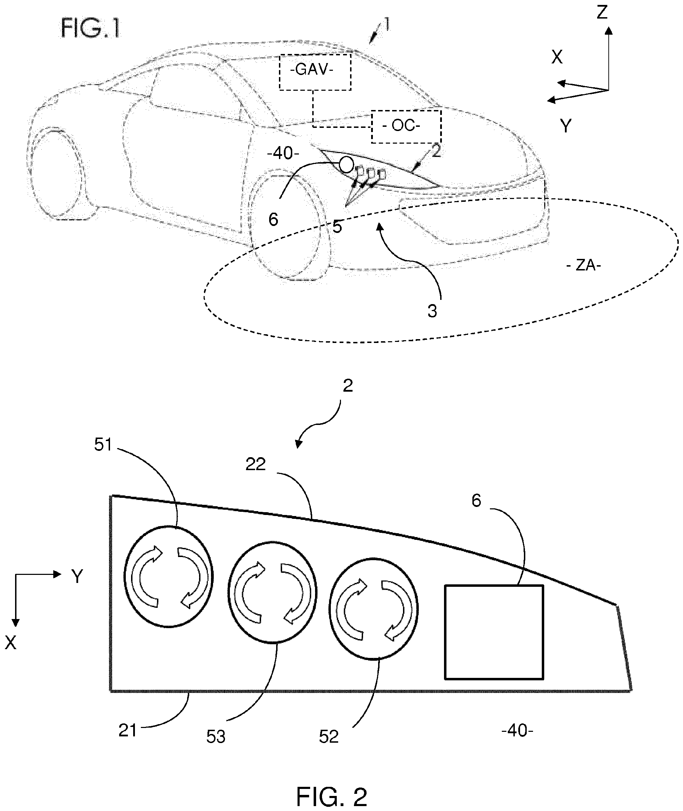

Les trois modules 51-53 sont disposés à proximité de l'aile avant droite 40 du véhicule 1 (à gauche du module d'éclairage principal 6, en considérant le projecteur avant droit 2 de la figure 2).

Ils sont disposés à égale distance les uns des autres à l'intérieur du projecteur 2 et leurs axes de rotation respectifs parallèles entre eux suivant Z, sont alignés suivant sensiblement un arc de cercle dont le rayon correspond sensiblement au rayon de courbure de la face externe 22 du projecteur 2 : le premier module référencé 51 est celui qui est le plus éloigné du module d'éclairage principal 6 fixe, le deuxième module référencé 52 est celui qui en est le plus proche (le plus à l'extérieur du véhicule 1) ; le troisième module référencé 53 est disposé entre les premier et deuxième modules 51 et 52.

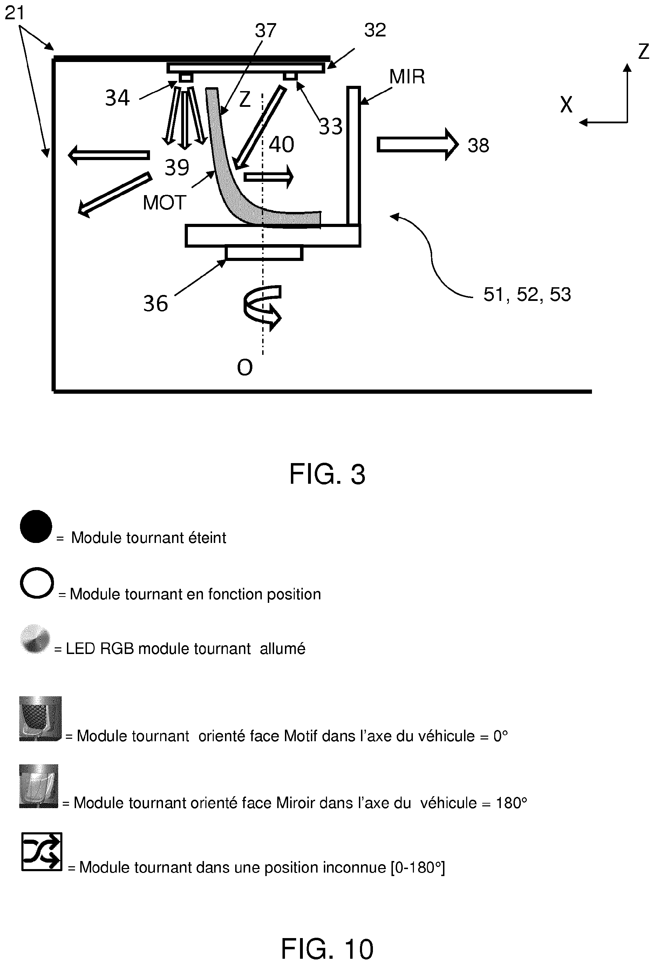

La figure 3 illustre un projecteur 2 selon l'invention, suivant une vue en coupe schématique, transversale, du projecteur 2 (suivant X), passant par le centre d'un des trois module tournants 51-52.

Chacun des trois modules tournants 51-53 comprend une monture définissant un plateau tournant 36 de forme générale cylindrique, monté à rotation sur le boitier 21 autour d'un axe vertical OZ.

Le plateau tournant 36 supporte sur sa face supérieure, un réflecteur 35 centrée sur l'axe OZ et solidaire du plateau 36. La face avant du réflecteur 35 définit une surface réfléchissante 37 de forme générale parabolique apte à réfléchir un faisceau lumineux émis par une première source de lumière 33, dite secondaire, comportant une ou plusieurs diode(s) électroluminescente(s) ou LEDs, aptes à générer une lumière blanche, dites LEDs blanches.

La ou les LEDs blanches 33 sont disposées sur un support fixe 32 par rapport au boiter 21, disposé en regard de la surface réfléchissante 37. Le support 32 est notamment une plaque de circuit imprimé (ou Printed Circuit Board - PCB) s'étendant parallèlement à la surface supérieure du plateau 36.

Le plateau 36 supporte en outre une lentille de projection 31, solidaire du plateau 36, s'étendant en regard de la surface réfléchissante 37; ladite lentille de projection 31 définissant une portion de paroi latérale cylindrique centrée dans le plan de coupe XZ. La lentille de projection 31 s'étend perpendiculairement au bord périphérique de la surface supérieure du plateau 36 supportant le réflecteur 35.

La lentille de projection 31 participe avec le réflecteur 35 à la projection du faisceau lumineux 40 vers l'extérieur du boitier 2, à l'avant 38 du véhicule 1.

La lentille 31 est réalisée, par exemple, dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

Le support PCB 32 supporte également une seconde source de lumière secondaire 34 disposée en aplomb de la face arrière du réflecteur 35.

Cette seconde source de lumière secondaire 34 est utilisée pour produire un rétro-éclairage 39 de lumière colorée, fixe ou changeante, vers les parois internes du boitier 21, masques ou d'autres parties appartenant au ou rapportées dans le boitier 21 ainsi que sur la face arrière du réflecteur 35.

Cette source de lumière colorée est obtenue à partir d'une diode électroluminescente particulière (LED en reprenant l'acronyme anglo-saxon) constituée de trois LEDs élémentaires de couleurs respectives rouge, verte et bleue (RGB en reprenant l'acronyme anglo-saxon), d'où la désignation de LED RGB, apte à produire un éclairage de couleurs changeantes obtenu par mélange des trois couleurs suivant les alimentations respectives des trois LEDs de couleur.

La face arrière du réflecteur 35 est recouverte d'un motif permettant d'identifier la marque du véhicule 1.

On désignera par la suite la face arrière du réflecteur 35, porteuse du motif par « face motif » MOT et la face avant du réflecteur 35, vue à travers la lentille de projection 31, par « face miroir » MIR.

Le motif peut être soit sérigraphié sur la face arrière du réflecteur 35 soit obtenu par grattage local de la face arrière. Il peut être également réalisé sur une coque rapportée sur la face arrière du réflecteur 35.

Une seconde lentille, non représentée, peut être disposée en regard de la face motif MOT et être supportée de la même manière que la lentille de projection 31 sur le plateau tournant 36.

Cette seconde lentille n'aura pas la même fonction optique que celle de la lentille de projection 31 mais sa tranche pourra être utilisée comme guide de lumière pour une lumière blanche émise par une autre source de lumière blanche non représentée qui serait disposée par exemple au voisinage de la LED RGB.

L'éclairage de la tranche aura pour effet de souligner la face motif MOT donc de la mettre en valeur.

Les deux faces (face motif MOT et face miroir MIR) sont donc disposées à 180° l'une de l'autre, ce qui signifie que pour passer d'une configuration dans laquelle la face miroir MIR est orientée vers l'arrière du boitier 21 (vers l'arrière du véhicule 1) à une configuration où cette même face MIR est orientée vers l'avant du véhicule 1, il faut faire tourner le module 51-53 d'un demi-tour (180°) autour de son axe de rotation OZ dans un sens ou dans l'autre (et réciproquement quand c'est la face motif MOT qui est exposée vers l'arrière du véhicule 1) .

Dans la configuration illustrée à la figure 3, le module tournant 51-53 est orienté avec sa face miroir MIR vers l'avant du véhicule 1 ; sa face motif MOT étant orientée vers le fond du boitier 21 du projecteur 2 (vers l'arrière du véhicule 1).

Les sources de lumières secondaires, blanches 33 ou colorées 34, peuvent être commandées indépendamment l'unes des autres ou conjointement. L'agencement des sources secondaires 33 et 34 sur leur support 32 PCB par rapport au réflecteur 35 et l'agencement du réflecteur 35 par rapport au support PCB 32 sont déterminés de manière à ce que les deux éclairages 39 et 40 soient de préférence confinés dans leurs zones d'éclairement respectives. A cet effet, la partie supérieure du réflecteur 35 est dimensionnée pour arriver au voisinage de la plaque support PCB 32 et servir de cloison pour les deux compartiments d'éclairage avant 40 et arrière 39.

Le système d'entraînement des modules tournants 51-53, non représenté, peut comprendre de manière connue, un mécanisme à base de bielle(s), cames et/ou d'engrenages, couplé aux modules tournants 51-53 pour assurer leur rotation de manière indépendante ou conjointe et/ou complémentaire avec des vitesses de rotation différentes.

Le système d'entraînement comprend, en outre, une motorisation telle qu'un moteur pas à pas, couplée au mécanisme et commandée par un organe de commande OC apte à commander les modules tournants 51-53 pour les faire tourner à différentes vitesses.

Le module d'éclairage principal 6 comporte de manière connue une source lumineuse apte à assurer l'éclairage principal du véhicule 1 dans l'axe longitudinal (selon X) du véhicule 1, par exemple une ampoule à gaz (typiquement halogène ou au xénon), ou encore à diode(s) électroluminescente(s) ou LED.

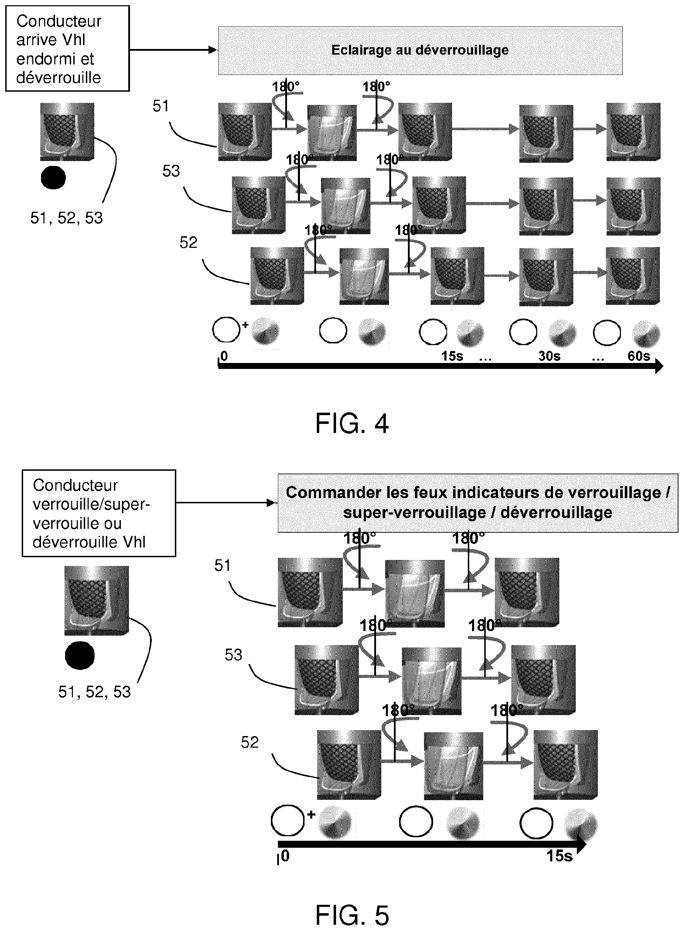

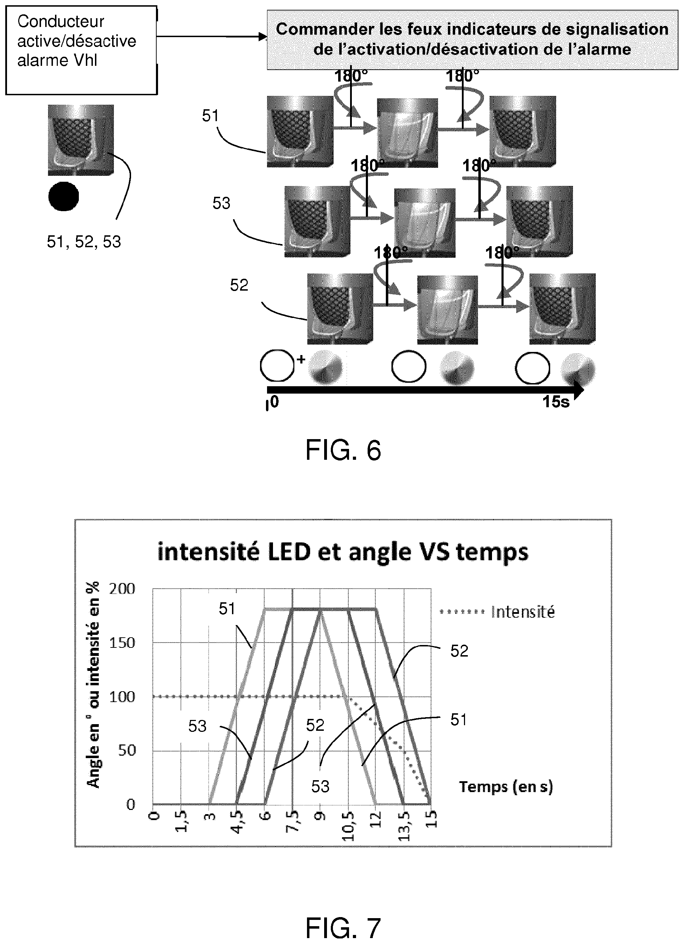

Les figures 4, 5 et 6 illustrent un exemple de séquence d'animation visuelle d'une fonction d'éclairage et/ou de signalisation suite, respectivement, à une demande de déverrouillage des ouvrants du véhicule (Vhl) de nuit (Fig. 4), une demande ou commande de feux indicateur de verrouillage/super-verrouillage/déverrouillage des ouvrants, de jour (Fig. 5) et une demande ou commande de feux indicateurs de signalisation de l'activation/désactivation de l'alarme (Fig. 6).

La figure 7, illustre un chronogramme du cycle de l'animation identique pour les trois types de commandes introduites ci-dessus.

Pour une demande déverrouillage des ouvrants du véhicule (Vhl) de nuit (Fig. 4), la situation initiale est la suivante :
Le conducteur arrive près du véhicule 1 qui est endormi (véhicule moteur arrêté et ouvrants fermés) et active le déverrouillage des ouvrants du véhicule par exemple via son plip.

A réception du signal par l'organe de gestion d'accès GAV du véhicule, hébergé par exemple dans le calculateur habitacle, ce dernier active l'organe de commande OC pour débuter l'animation conformément à la loi de commande illustrée par le chronogramme de la figure 7.

Les trois modules tournants 51-53 sont éteints et présentent leurs faces motif MOT vers l'avant du véhicule.

Le cycle de l'animation débute sur action du conducteur (commande de déverrouillage) via le plip par exemple.

Les trois modules tournants 51-53 initient un cycle de rotations asynchrones en associant des lumières blanches 40 générées par les premières sources de lumière secondaires 33 aux lumières à couleurs changeantes 39 générées par les secondes sources de lumière secondaires 34.

Le chronogramme de la figure 7 illustre les lois de commande, implémentée par l'organe de commande OC que suivent les trois modules tournants 51-53, suite à l'activation manuelle du déverrouillage sur une durée de cycle de T = 15s.

Au début de l'animation (t=0), les modules tournants 51-53 sont tous orientés avec leur face motif MOT vers l'avant du véhicule 1.

Un des effets recherché par l'animation visuelle est d'obtenir une continuité et une fluidité dans le mouvement de rotation des modules : la continuité devant assurer une illumination sans tache d'ombre et la fluidité du mouvement, l'attractivité de l'animation visuelle.

Deux modules tournants peuvent suffire pour obtenir cet effet, en exploitant par exemple uniquement les premier et deuxième modules 51 et 52.

Ainsi, en considérant les premier et deuxième modules 51 et 52 qui sont les modules les plus extrêmes du projecteur 2, tel qu'illustré aux figures 1 et 2, l'organe de commande OC commande, au bout de 3s, une première rotation du premier module tournant 51, préalablement dans une position face motif MOT orientée vers l'avant du véhicule, d'un angle de 180° autour de son axe de rotation OZ, suivant un premier sens de rotation, pour orienter sa face miroir MIR vers l'avant du véhicule.

A la fin de la première rotation du premier module tournant 51, au bout de 6s (face miroir MIR vers l'avant), il commande une première rotation du deuxième module tournant 52, préalablement dans une position face motif MOT orientée vers l'avant du véhicule, d'un angle de 180° autour de son axe de rotation OZ suivant le premier sens de rotation.

Au bout de 9s, quand le deuxième module 52 a terminé sa première rotation et présente sa face miroir MIR vers l'avant du véhicule 1, il commande ensuite une deuxième rotation du premier module 51 d'un angle de 180° selon un deuxième sens de rotation opposé au premier.

Au bout de 12s, quand le premier module 51 a terminé sa deuxième rotation, et présente sa face motif MOT vers l'avant du véhicule, il commande ensuite une deuxième rotation du deuxième module 52 d'un angle de 180° selon le deuxième sens de rotation ; les premier et deuxième modules tournants 51, 52 présentant à la fin du cycle de durée T = 15s leurs faces motif MOT de manière visible de l'extérieur du véhicule 1.

A la fin des première et deuxième rotations, les deux modules 51 et 52 ont donc présenté chacun successivement leur face miroir MIR, pendant 3s, orientée vers l'avant du véhicule.

La continuité et la fluidité du mouvement peuvent être renforcées par la présence du troisième module tournant 53. Ce dernier est disposé entre les premier et deuxième modules tournants 51 et 52 de manière à ce que les rotations successives des trois modules 51-53 s'enchainent toutes les 1,5s à partir des trois premières secondes du cycle de durée T = 15s.

Ce qui se traduit par une première rotation du troisième module tournant 53 d'un angle de 180° autour de son axe de rotation OZ entre les premières rotations des premier 51 et deuxième 52 modules tournants et à une deuxième rotation du troisième module 53 d'un angle de 180° selon le deuxième sens de rotation entre les secondes rotations des premier 51 et deuxième 52 modules tournants.

Ainsi, l'organe de commande OC commande une première rotation du troisième module tournant 53, préalablement dans une position face motif MOT orientée vers l'avant du véhicule, au bout de 4,5s d'un angle de 180° autour de son axe de rotation OZ.

Au bout de 7,5s le troisième module 53 présente sa face miroir MIR vers l'avant du véhicule puis au bout de 10,5s l'organe de commande OC commande une deuxième rotation du troisième module 53 d'un angle d'au moins 180° selon le deuxième sens de rotation.

Le troisième module 53 présente sa face motif MOT orientée vers l'avant du véhicule 1 au bout de 13,5s.

Comme pour les premier et deuxièmes modules 51 et 52, à la fin du premier cycle, le troisième module 53 a présenté sa face miroir MIR, pendant 3s, orientée vers l'avant du véhicule. Comme illustré sur la figure 5, cette durée de 3s vient chevaucher les durées de 3s respectives aux premier et deuxième modules 51 et 52.

L'intensité lumineuse (lumière blanche et lumière colorée) de chacun des trois modules est commandée par l'organe de commande OC pour que l'intensité de l'éclairage et/ou de la signalisation globale reste maximale (100%) jusqu'au début de la deuxième rotation du troisième module 53, jusqu'à 10,5s puis décroit linéairement suivant une première pente de 50% en 3s, entre 10,5s et 13,5s et une deuxième pente de 50% en 1,5s entre 13,5s et 15s pour arriver à l'extinction complète des feux à la fin de la deuxième rotation du deuxième module 52 .

Pour une demande ou commande de feux indicateurs de verrouillage/super-verrouillage/déverrouillage des ouvrants (Fig. 5), l'animation est la même.

La situation initiale est la suivante :
Le conducteur commande le verrouillage, le super-verrouillage ou le déverrouillage de son véhicule toujours par exemple via son plip.

A réception du signal par l'organe de gestion d'accès GAV du véhicule, ce dernier active l'organe de commande OC pour débuter l'animation conformément à la loi de commande illustrée par le chronogramme de la figure 7.

Pour une demande ou commande de feux indicateurs de signalisation de l'activation/désactivation de l'alarme (Fig. 6), l'animation est la même.

La situation initiale est la suivante :
Le conducteur active ou désactive le système d'alarme anti-intrusion de son véhicule toujours par exemple via son plip.

A réception du signal par l'organe de gestion d'accès GAV du véhicule, ce dernier active l'organe de commande OC pour débuter l'animation conformément à la loi de commande illustrée par le chronogramme de la figure 7.

Les modules tournants 51-53 permettent ainsi de balayer ladite zone avant ZA et remplir leur fonction d'éclairage et/ou de signalisation en relation avec les fonctions de gestion d'accès du véhicule tout en offrant une animation visuelle attractive.

L'animation décrite ci-dessus, prenait comme hypothèse que les modules tournants 51-53 étaient orientés avec les faces motif MOT vers l'avant du véhicule 1 suivant l'axe longitudinal du véhicule lorsque la commande de la fonction est reçu par l'organe OC de commande du véhicule 1.

Cependant, il est possible qu'une autre fonction soit déjà en cours et que l'angle du module tournant 51-52 soit dans une situation initiale dans laquelle la position des modules tournants 51-53 est inconnue, comprise entre 0° et 180° avec activation ou pas des sources de lumière blanche et/ou colorée tel qu'illustré à la figure 6.

Pour tenir compte de cette position aléatoire des modules tournants 51-53, la loi de commande, telle qu'illustrée à la figure 7, prévoit un temps ou délai de repositionnement de 3s au début de chaque cycle afin que les projecteurs tournants 51-53 prennent leurs positions face motif MOT (0°) orientée suivant l'axe du véhicule 1 avant d'initier réellement leur animation.

Pendant ces 3s les sources de lumière blanche et colorée sont activées avec une intensité lumineuse constante, par exemple maximale (100%)

La durée T du cycle peut être réglée à 15s, 30s ou 60s au maximum. La durée T du cycle peut être paramétrée en fonction du souhait du conducteur.

De manière avantageuse, lorsque l'éclairage d'ambiance intérieur du véhicule 1 permet un changement de couleur, alors la couleur du rétro-éclairage par les LEDs RGB 34, change de couleur de manière synchrone avec les mêmes teintes. Ces variations d'intensité et de couleurs des éclairages intérieur et extérieur, de manière synchronisée, renforce l'impact visuel de l'animation d'accompagnement. La palette de couleurs des éclairages intérieur et extérieur peut être définie par le conducteur ou être prédéterminée par défaut dans le calculateur habitacle.

Cette animation visuelle peut s'intégrer dans une fonction d'éclairage et/ou de signalisation générale dite « d'accueil » qui se décline sous la forme de différentes mises en scènes de l'éclairage et/ou de la signalisation du véhicule 1 à destination du conducteur et des passagers du véhicule 1.

Ces mises en scène mettent notamment en jeu les moyens d'éclairage et/ou de signalisation extérieurs et des moyens d'éclairage intérieurs du véhicule 1 ; moyens qui peuvent par ailleurs participer à des ambiances visuelles entrant dans des ambiances « polysensorielles » personnalisables, en coopération avec d'autres organes ou équipements du véhicule.

## Revendications

1. Dispositif d'éclairage et/ou de signalisation d'un véhicule automobile (1), apte à illuminer une zone (ZA) s'étendant autour du véhicule (1)), comportant au moins deux premières sources de lumière blanche (33) associée respectivement à au moins des premier (51) et deuxième (52) modules d'éclairage et/ou de signalisation tournants, aptes à générer respectivement des faisceaux lumineux suivant des directions déterminées, un organe de commande (OC) apte à commander la rotation et l'intensité lumineuse des premier (51) et deuxième (52) modules tournants ; chacun des premier (51) et deuxième (52) modules tournants présentant une première face (MIR) et une deuxième face (MOT) opposée à la première : la première face (MIR) comportant une surface réfléchissante (37) apte à orienter le faisceau lumineux (40) émis par la première source de lumière blanche (33) vers ladite zone (ZA) et la deuxième face (MOT) supportant un motif ;
**caractérisé en ce que** ledit organe de commande est couplé à un dispositif de gestion d'accès au véhicule (GAV), edit organe de commande (OC) commandant de manière asynchrone la rotation des premier et deuxième modules tournants (51, 52) pendant un cycle de durée déterminée (T) à la suite d'une détection d'un signal de commande reçu par le dispositif de gestion d'accès au véhicule (GAV) pour orienter leurs premières faces (MIR) vers ladite zone (ZA) par une succession d'au moins deux rotations d'au moins 180° dans un sens puis dans l'autre de chaque module tournant (51, 52) avec une intensité lumineuse de la première source de lumière blanche (33) variable en fonction du temps ; ledit organe de commande (OC) orientant les modules (51, 52), de manière asynchrone avant la fin d'un cycle de durée déterminée (T) de sorte à présenter leurs deuxièmes faces (MOT) de manière visible de l'extérieur du véhicule (1) à la fin du cycle de durée déterminée (T).

2. Dispositif selon la revendication 1, **caractérisé en ce qu'**il comporte en outre un troisième module tournant (53), disposé entre les premier (51) et deuxième (52) modules tournants; chacun des trois modules tournants (51-53) étant commandé successivement en commençant par le premier module tournant (51), puis le troisième module tournant (53) et enfin le deuxième module tournant (52).

3. Dispositif selon l'une des revendications 1 ou 2, **caractérisé en ce qu'**il comporte au moins une deuxième source de lumière (34) apte à générer un faisceau lumineux (39) en direction de la deuxième face (MOT) des modules tournants (51-53) ; ladite source de lumière (34) étant apte à générer une lumière à couleur changeante.

4. Projecteur (2) de véhicule (1) automobile comportant un boitier (21), **caractérisé en ce que** ledit boitier (21) supporte à rotation des modules tournants (51-53) d'un dispositif selon l'une des revendications précédentes.

5. Procédé de commande d'un dispositif d'éclairage et/ou de signalisation selon l'une des revendications 1 à 3, **caractérisé en ce qu'**il consiste en début du cycle de durée déterminée (T) à commander une première rotation du premier module tournant (51) d'un angle d'au moins 180° autour de son axe de rotation (OZ) suivant un premier sens de rotation, puis à la fin de la première rotation du premier module tournant (51), à commander une première rotation du deuxième module tournant (52) d'un angle d'au moins 180° autour de son axe de rotation (OZ) suivant le premier sens de rotation, puis à commander une deuxième rotation du premier module (51) d'un angle d'au moins 180° selon un deuxième sens de rotation opposé au premier quand le deuxième module (52) a terminé sa première rotation, et à commander une deuxième rotation du deuxième module (52) d'un angle d'au moins 180° selon le deuxième sens de rotation quand le premier module (51) a terminé sa deuxième rotation de sorte à présenter à la fin du cycle de durée (T) les deuxièmes faces (MOT) des premier et deuxième module tournants (51, 52) de manière visible de l'extérieur du véhicule (1).

6. Procédé de commande selon la revendication précédente d'un dispositif d'éclairage et/ou de signalisation selon la revendications 2, **caractérisé en ce qu'**il consiste à commander une première rotation du troisième module tournant (53) d'un angle d'au moins 180° autour de son axe de rotation (OZ) entre les premières rotations des premier (51) et deuxième (52) modules tournants et à commander une deuxième rotation du troisième module (53) d'un angle d'au moins 180° selon le deuxième sens de rotation entre les secondes rotations des premier (51) et deuxième (52) modules tournants.

7. Procédé de commande selon l'une quelconque des revendications 5 à 6, d'un dispositif selon la revendication 3, **caractérisé en ce qu'**il consiste à commander une diminution progressive de l'intensité de l'éclairage et/ou de signalisation des première (33) et deuxième sources de lumière (34) à la fin de la période (T) déterminée.

8. Procédé selon la revendication précédente, **caractérisé en ce qu'**il consiste à commander une diminution progressive de l'intensité de l'éclairage et/ou de signalisation des première (33) et deuxième sources de lumière (34) à la fin de la période (T) déterminée, en fonction de la diminution progressive de l'intensité d'un éclairage d'ambiance intérieur du véhicule (1).

9. Procédé selon l'une quelconque des revendications 5 à 8, **caractérisé en ce qu'**il consiste à commander un changement de couleur de l'éclairage et/ou de signalisation de la deuxième source de lumière (34) en fonction d'un changement de couleur d'un éclairage d'ambiance intérieur du véhicule (1).

## Patentansprüche

1. Beleuchtungs- und/oder Signalgebungsvorrichtung für ein Kraftfahrzeug (1), die geeignet ist, eine Zone (ZA) zu beleuchten, die sich um das Fahrzeug (1) herum erstreckt, mit mindestens zwei ersten weißen Lichtquellen (33), die jeweils mindestens einem ersten (51) und einem zweiten (52) drehbaren Beleuchtungs- und/oder Signalgebungsmodul zugeordnet sind, die geeignet sind, jeweilige Lichtstrahlen in bestimmten Richtungen zu erzeugen, einem Steuerorgan (OC), das geeignet ist, die Drehung und die Lichtintensität des ersten (51) und des zweiten (52) drehbaren Moduls zu steuern; jedes der ersten (51) und zweiten (52) Rotationsmodule eine erste Fläche (MIR) und eine zweite Fläche (MOT) gegenüber der ersten aufweist: wobei die erste Fläche (MIR) eine reflektierende Oberfläche (37) aufweist, die in der Lage ist, den von der ersten Weißlichtquelle (33) emittierten Lichtstrahl (40) zu der Zone (ZA) zu lenken, und die zweite Fläche (MOT) ein Muster trägt; **dadurch gekennzeichnet, dass** das Steuerelement mit einer Fahrzeug-Zugangsverwaltungsvorrichtung (GAV) gekoppelt ist, wobei das Steuerelement (OC) asynchron die Drehung des ersten und zweiten Drehmoduls (51) steuert, 52) während eines Zyklus von bestimmter Dauer (T) nach der Erfassung eines Steuersignals, das von der Vorrichtung zur Steuerung der Zufahrt (GAV) der Fahrzeuge empfangen wird, um ihre ersten Flächen (MIR) in Richtung dieser Zone (ZA) durch eine Folge von mindestens zwei Drehungen um mindestens 180° in einer Richtung und dann in der anderen Richtung jedes Drehmoduls (51, 52) mit einer als Funktion der Zeit variablen Lichtstärke der ersten weißen Lichtquelle (33) auszurichten; wobei das Steuerelement (OC) die Module (51, 52) asynchron vor dem Ende eines Zyklus von bestimmter Dauer (T) so ausrichtet, dass ihre zweiten Flächen (MOT) am Ende des Zyklus von bestimmter Dauer (T) auf eine von der Außenseite des Fahrzeugs (1) sichtbare Weise präsentiert werden.

2. Vorrichtung nach Anspruch 1, **dadurch gekennzeichnet, dass** sie außerdem ein drittes Drehmodul (53) umfasst, das zwischen dem ersten (51) und dem zweiten (52) Drehmodul angeordnet ist; wobei jedes der drei Drehmodule (51-53) nacheinander gesteuert wird, beginnend mit dem ersten Drehmodul (51), dann dem dritten Drehmodul (53) und schließlich dem zweiten Drehmodul (52).

3. Vorrichtung nach einem der Ansprüche 1 oder 2, **dadurch gekennzeichnet, dass** sie mindestens eine zweite Lichtquelle (34) umfasst, die in der Lage ist, einen Lichtstrahl (39) in Richtung der zweiten Fläche (MOT) der rotierenden Module (51-53) zu erzeugen; wobei die Lichtquelle (34) in der Lage ist, Licht mit wechselnder Farbe zu erzeugen.

4. Kraftfahrzeugscheinwerfer (1) (2) mit einem Gehäuse (21), **dadurch gekennzeichnet, dass** das Gehäuse (21) drehbare Module (51-53) einer Vorrichtung gemäß einem der vorstehenden Ansprüche drehbar trägt.

5. Verfahren zur Steuerung einer Beleuchtungs- und/oder Signalgebungsvorrichtung nach einem der Ansprüche 1 bis 3, **dadurch gekennzeichnet, daß** es darin besteht, zu Beginn des Zyklus von bestimmter Dauer (T) eine erste Drehung des ersten Drehmoduls (51) um einen Winkel von mindestens 180° um seine Drehachse (OZ) in einer ersten Drehrichtung zu steuern, dann am Ende der ersten Drehung des ersten Drehmoduls (51), um eine erste Drehung des zweiten Drehmoduls (52) um einen Winkel von mindestens 180° um seine Drehachse (OZ) in der ersten Drehrichtung zu befehlen, dann eine zweite Drehung des ersten Moduls (51) um einen Winkel von mindestens 180° in einer zweiten, der ersten entgegengesetzten Drehrichtung zu befehlen, wenn das zweite Modul (52) seine erste Drehung abgeschlossen hat, und bei der Steuerung einer zweiten Drehung des zweiten Moduls (52) um einen Winkel von mindestens 180° in der zweiten Drehrichtung, wenn das erste Modul (51) seine zweite Drehung vollendet hat, um am Ende des Dauerzyklus (T) die zweiten Flächen (MOT) des ersten und zweiten Drehmoduls (51, 52) in einer von der Außenseite des Fahrzeugs (1) sichtbaren Weise darzustellen.

6. Verfahren zur Steuerung einer Beleuchtungs- und/oder Signalgebungsvorrichtung nach Anspruch 2, **dadurch gekennzeichnet, dass** es darin besteht, eine erste Drehung des dritten Drehmoduls (53) um einen Winkel von mindestens 180° um seine Drehachse (OZ) zwischen den ersten Drehungen des ersten (51) und des zweiten (52) Drehmoduls zu steuern und eine zweite Drehung des dritten Moduls (53) um einen Winkel von mindestens 180° in der zweiten Drehrichtung zwischen den zweiten Drehungen des ersten (51) und des zweiten (52) Drehmoduls zu steuern.

7. Verfahren zur Steuerung einer Vorrichtung nach einem der Ansprüche 5 bis 6 nach Anspruch 3, **dadurch gekennzeichnet, dass** es darin besteht, eine progressive Abnahme der Intensität der Beleuchtung und/oder der Signalisierung der ersten (33) und der zweiten (34) Lichtquelle am Ende der bestimmten Periode (T) zu steuern.

8. Verfahren nach dem vorhergehenden Anspruch, **dadurch gekennzeichnet, dass** es darin besteht, eine progressive Abnahme der Intensität der Beleuchtung und/oder Signalisierung der ersten (33) und zweiten (34) Lichtquelle am Ende der bestimmten Periode (T) in Abhängigkeit von der progressiven Abnahme der Intensität einer inneren Umgebungsbeleuchtung des Fahrzeugs (1) zu steuern.

9. Verfahren nach einem der Ansprüche 5 bis 8, **dadurch gekennzeichnet, dass** es darin besteht, eine Änderung der Farbe der Beleuchtung und/oder Signalisierung der zweiten Lichtquelle (34) in Abhängigkeit von einer Änderung der Farbe einer inneren Umgebungsbeleuchtung des Fahrzeugs (1) zu steuern.

## Claims

1. Lighting and/or signalling device for a motor vehicle (1), able to illuminate a zone (ZA) extending around the vehicle (1), comprising at least two first white light sources (33) associated respectively with at least first (51) and second (52) rotating lighting and/or signalling modules, able to generate respectively light beams in determined directions, a control member (OC) able to control the rotation and the light intensity of the first (51) and second (52) rotating modules; each of the first (51) and second (52) rotating modules having a first face (MIR) and a second face (MOT) opposite to the first: the first face (MIR) comprising a reflecting surface (37) capable of directing the light beam (40) emitted by the first white light source (33) towards the said zone (ZA) and the second face (MOT) supporting a pattern ; **characterized in that** said control unit is coupled to a vehicle access management device (GAV), said control unit (OC) controlling asynchronously the rotation of the first and second rotating modules (51, 52) during a cycle of determined duration (T) following the detection of a control signal received by the vehicle access management device (GAV) to orient their first faces (MIR) towards said zone (ZA) by a succession of at least two rotations of at least 180° in one direction then in the other direction of each rotating module (51, 52) with a luminous intensity of the first white light source (33) variable as a function of time ; the said control device (OC) orienting the modules (51, 52) asynchronously before the end of a cycle of determined duration (T) so as to present their second faces (MOT) in a manner visible from the outside of the vehicle (1) at the end of the cycle of determined duration (T).

2. Device according to claim 1, **characterized in that** it further comprises a third rotating module (53), arranged between the first (51) and second (52) rotating modules; each of the three rotating modules (51-53) being controlled successively starting with the first rotating module (51), then the third rotating module (53) and finally the second rotating module (52).

3. Device according to one of claims 1 or 2, **characterized in that** it comprises at least a second light source (34) capable of generating a light beam (39) in the direction of the second face (MOT) of the rotating modules (51-53); said light source (34) being capable of generating color-changing light.

4. Headlamp (2) for a motor vehicle (1) comprising a housing (21), **characterized in that** said housing (21) rotatably supports rotating modules (51-53) of a device according to one of the preceding claims.

5. Method for controlling a lighting and/or signalling device according to one of the claims 1 to 3, **characterized in that** it consists at the beginning of the cycle of determined duration (T) in controlling a first rotation of the first rotating module (51) by an angle of at least 180° about its axis of rotation (OZ) in a first direction of rotation, then at the end of the first rotation of the first rotating module (51), to command a first rotation of the second rotating module (52) by an angle of at least 180° around its axis of rotation (OZ) according to the first direction of rotation, then to command a second rotation of the first module (51) by an angle of at least 180° in a second direction of rotation opposite to the first when the second module (52) has completed its first rotation, and to command a second rotation of the second module (52) by an angle of at least 180° according to the second direction of rotation when the first module (51) has finished its second rotation so as to present at the end of the duration cycle (T) the second faces (MOT) of the first and second rotating modules (51,52) in a manner visible from the outside of the vehicle (1).

6. Method for controlling according to the preceding claim a lighting and/or signalling device according to claim 2, **characterized in that** it consists in controlling a first rotation of the third rotating module (53) by an angle of at least 180° about its axis of rotation (OZ) between the first rotations of the first (51) and second (52) rotating modules and in controlling a second rotation of the third module (53) by an angle of at least 180° in the second direction of rotation between the second rotations of the first (51) and second (52) rotating modules.

7. Method for controlling according to any one of claims 5 to 6, a device according to claim 3, **characterized in that** it consists in controlling a progressive decrease in the intensity of the lighting and/or signalling of the first (33) and second (34) light sources at the end of the determined period (T).

8. Method according to the preceding claim, **characterized in that** it consists in controlling a progressive decrease in the intensity of the lighting and/or signalling of the first (33) and second (34) light sources at the end of the determined period (T), as a function of the progressive decrease in the intensity of an interior ambient lighting of the vehicle (1).

9. A method according to any one of claims 5 to 8, **characterized in that** it consists in controlling a change in the color of the lighting and/or signalling of the second light source (34) as a function of a change in the color of an interior ambient lighting of the vehicle (1).
